# EUROPEAN PATENT APPLICATION

(11) **EP 4 417 350 A1**
(43) Date of publication of application: **21.08.2024**
(21) Application number: 22880880.4
(22) Date of filing: 05.10.2022
(51) Int. Cl.: B23C 5/20, B23C 5/10

(54) **CUTTING INSERT, CUTTING TOOL, AND METHOD FOR MANUFACTURING CUT PRODUCT**

(30) Priority: 11.10.2021 JP 2021166753
(71) Applicant: Kyocera Corporation, Kyoto-shi Kyoto 612-8501 (JP)
(72) Inventor: YAMAMICHI, Kazuki, Kyoto-shi, Kyoto 612-8501 (JP); IWASAKI, Kento, Kyoto-shi, Kyoto 612-8501 (JP)
(74) Representative: Viering, Jentschura & Partner mbB Patent- und Rechtsanwälte
(86) International application number: PCT/JP2022/037260
(87) International publication number: WO 2023/063184

(57) **Abstract**

A first lateral surface of a cutting insert in a non-limiting embodiment of the present disclosure includes a first region, a second region, and a third region. The first region includes a first upper region inclined outward, and a first lower region that is connected to the first upper region and is parallel to a central axis. The second region includes a second upper region inclined inward, and a second lower region that is located closer to a lower surface than the second upper region and is parallel to the central axis. The third region includes a third upper region inclined outward, a third lower region, and a concave part. The third lower region is located closer to the lower surface than the third upper region, and is located more outside than the third upper region and is parallel to the central axis. The concave part is located between the third upper region and the third lower region.

## Description

### CROSS-REFERENCE TO RELATED APPLICATIONS

The present application claims priority to Japanese Patent Application No. 2021-166753, filed October 11, 2021. The contents of the application are incorporated herein by reference in its entirety.

### TECHNICAL FIELD

The present disclosure generally relates to a cutting insert and a cutting tool used in a machining process of a workpiece, and a method for manufacturing a machined product. Specifically, the present disclosure relates to a cutting tool for use in a milling process.

### BACKGROUND

Cutting inserts discussed in, for example, Japanese Unexamined Patent Publication No. 2007-125669 (Patent Document 1), Japanese Unexamined Patent Publication No. 2008-511464 (Patent Document 2), and Japanese Unexamined Patent Publication No. 2017-056552 (Patent Document 3) have been known as a cutting insert for use in a machining process of a workpiece, such as metal. Each of the cutting inserts discussed in Patent Documents 1 to 3 includes an upper surface, a lower surface, a lateral surface, and an upper cutting edge. When attaching the cutting insert to a holder, a part of the lateral surface in the cutting insert abuts against the holder.

There has been a demand for a cutting insert that has high durability and offers high surface accuracy of a machined surface.

### SUMMARY

A cutting insert in a non-limiting embodiment of the present disclosure includes an upper surface having a polygonal shape, a lower surface located on a side opposite to the upper surface, a lateral surface located between the upper surface and the lower surface, and an upper cutting edge located on an intersection of the upper surface and the lateral surface. An imaginary straight line passing through a center of the upper surface and a center of the lower surface is a central axis. The upper surface includes a first corner, a second corner, and a first side that is connected to the first corner and the second corner and is inclined so as be closer to the lower surface as going from an end part being connected to the first corner toward an end part being connected to the second corner. The lateral surface includes a first lateral surface being connected to the first side.

The first side includes a first part being connected to the first corner, a second part being connected to the second corner, and a third part located between the first part and the second part. The first lateral surface includes a first region being connected to the first part, a second region being connected to the second part, and a third region being connected to the third part.

The first region includes, in a cross section orthogonal to the first side as viewed from above, a first upper region that is connected to the first part and is inclined outward as going away from the first part, and a first lower region that is connected to the first upper region and is parallel to the central axis.

The second region includes, in a cross section orthogonal to the first side as viewed from above, a second upper region that is connected to the second part and is inclined inward as going away from the second part, and a second lower region that is located closer to the lower surface than the second upper region and is parallel to the central axis.

The third region includes, in a cross section orthogonal to the first side as viewed from above, a third upper region, a third lower region, and a concave part. The third upper region is connected to the third part and is inclined outward as going away from the third part. The third lower region is located closer to the lower surface than the third upper region, and is located more outside than the third upper region and is parallel to the central axis. The concave part is located between the third upper region and the third lower region, and is recessed inward from an intersection of an imaginary extension line of the third upper region and an imaginary extension line of the third lower region.

### BRIEF DESCRIPTION OF THE DRAWINGS

FIG. 1 is a perspective view illustrating a cutting insert in a non-limiting embodiment of the present disclosure;
FIG. 2 is a perspective view identical to that of the cutting insert illustrated in FIG. 1;
FIG. 3 is a perspective view identical to that of the cutting insert illustrated in FIG. 1;
FIG. 4 is a top view of the cutting insert illustrated in FIG. 1 as viewed from above;
FIG. 5 is a bottom view of the cutting insert illustrated in FIG. 1 as viewed from below;
FIG. 6 is a side view of the cutting insert illustrated in FIG. 4 as viewed from A1 direction;
FIG. 7 is a side view of the cutting insert illustrated in FIG. 4 as viewed from A2 direction;
FIG. 8 is a side view of the cutting insert illustrated in FIG. 4 as viewed from A3 direction;
FIG. 9 is a side view identical to that of the cutting insert illustrated in FIG. 7;
FIG. 10 is a cross-sectional view of the cutting insert illustrated in FIG. 9, taken along line X-X;
FIG. 11 is a cross-sectional view of the cutting insert illustrated in FIG. 9, taken along line XI-XI;
FIG. 12 is a cross-sectional view of the cutting insert illustrated in FIG. 9, taken along line XII-XII;
FIG. 13 is an enlarged view of a region B1 illustrated in FIG. 12;
FIG. 14 is a cross-sectional view of the cutting insert illustrated in FIG. 9, taken along line XIV-XIV;
FIG. 15 is a cross-sectional view of the cutting insert illustrated in FIG. 9, taken along line XV-XV;
FIG. 16 is an enlarged view of a region B2 illustrated in FIG. 15;
FIG. 17 is a perspective view illustrating a cutting tool in a non-limiting embodiment of the present disclosure;
FIG. 18 is a side view of the cutting tool illustrated in FIG. 17;
FIG. 19 is an enlarged view of a region B3 illustrated in FIG. 17;
FIG. 20 is a schematic diagram illustrating one of steps in a method for manufacturing a machined product in a non-limiting embodiment of the present disclosure;
FIG. 21 is a schematic diagram illustrating one of the steps in the method for manufacturing a machined product in the non-limiting embodiment of the present disclosure; and
FIG. 22 is a schematic diagram illustrating one of the steps in the method for manufacturing a machined product in the non-limiting embodiment of the present disclosure.

### EMBODIMENTS

### <Cutting Inserts>

A cutting insert 1 (hereinafter also referred to as "insert 1") in a non-limiting embodiment of the present disclosure is described in detail below with reference to the drawings. For the convenience of description, the drawings referred to in the following illustrate, in simplified form, only main members necessary for describing the embodiment. The insert 1 may therefore include any arbitrary structural member not illustrated in the drawings referred to. Dimensions of the members in each of the drawings faithfully represent neither dimensions of actual structural members nor dimensional ratios of these members.

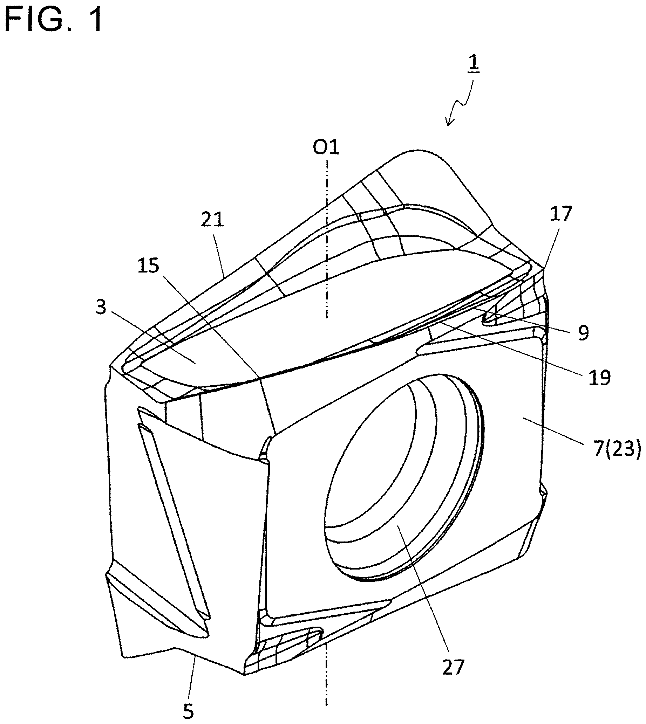

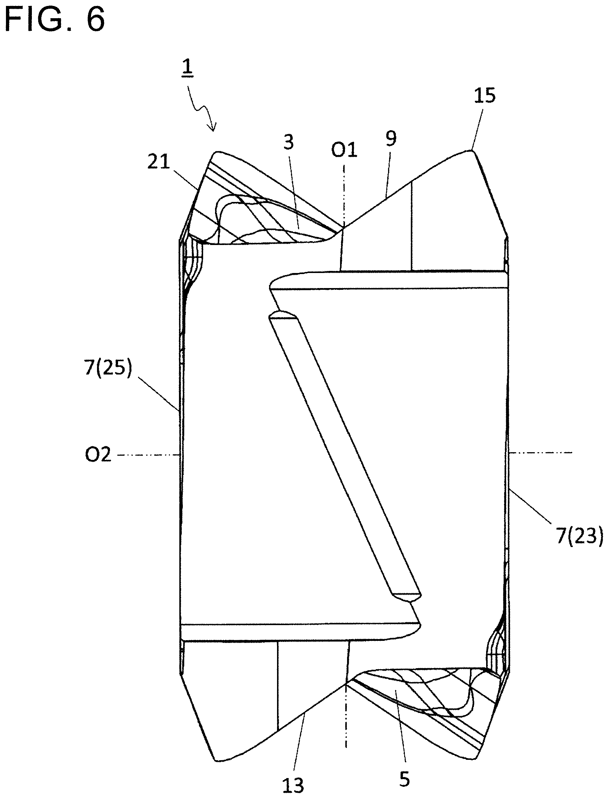

The insert 1 may include an upper surface 3, a lower surface 5, a lateral surface 7, and an upper cutting edge 9 as in the non-limiting embodiment illustrated in FIGs. 1 to 16. The terms "the upper surface 3" and "the lower surface 5" as used herein are used for the sake of convenience and do not respectively indicate upper and lower directions. For example, the upper surface 3 need not be directed upward when using the insert 1. These points are also true for other parts including the term "upper" or "lower."

The upper surface 3 may have a polygonal shape. The lower surface 5 may be located on a side opposite to the upper surface 3. Similarly to the upper surface 3, the lower surface 5 may have a polygonal shape. The insert 1 may have a polygonal plate shape.

Examples of the polygonal shape may include triangle, square, pentagon, hexagon, and octagon. For example, the upper surface 3 may have a rectangular shape as in the non-limiting embodiment illustrated in FIG. 1. The term "polygonal shape" as used herein need not be a strict polygonal shape. For example, a plurality of sides on the upper surface 3 need not be individually a strict straight line, but may be slightly curved in a front view (top view) of the upper surface 3.

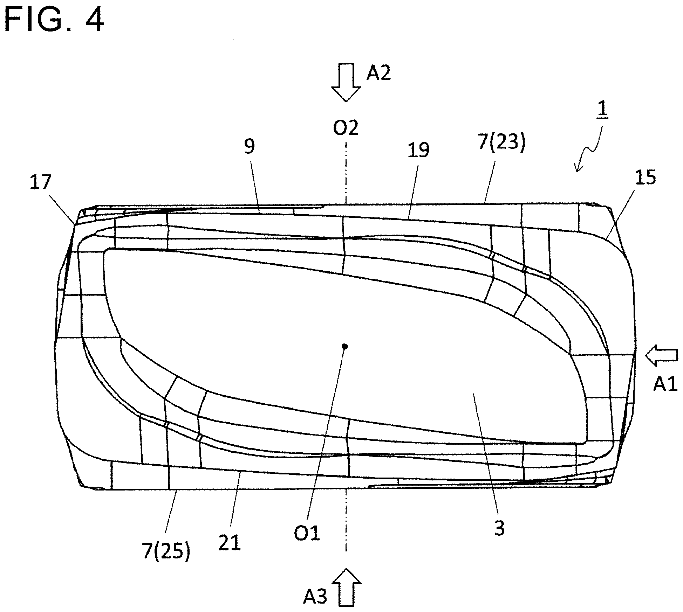

Corners of the upper surface 3, which are respectively located between adjacent sides, need not be a strict corner. In other words, a plurality of corners on the upper surface 3 need not be a strict corner. These corners may have a convex curvilinear shape as viewed from above, or a combined shape made up of a straight line and a curved line as viewed microscopically. Even if the corners include a part having the convex curvilinear shape and the sides are slightly curved, their respective radii of curvature are completely different from each other, and the upper surface 3 can be macroscopically evaluated as an approximately polygonal shape. The radius of curvature of the sides is set to be 100 times or more a radius of curvature of the corner in the embodiment illustrated in FIG. 4. These points are also true for the lower surface 5.

An imaginary straight line passing through a center of the upper surface 3 and a center of the lower surface 5 may be a central axis O1 of the insert 1. If the upper surface 3 has a polygonal shape, corners located at opposite corners on the upper surface 3 may be individually connected by a straight line, and a point of intersection of these straight lines may be the center of the upper surface 3. A starting point of a diagonal line may be a portion where extension lines of the individual sides constituting the polygonal shape intersect with each other. A centroid position of the upper surface 3 as viewed from above may be the center of the upper surface 3. The center of the lower surface 5 may be defined similarly to the center of the upper surface 3.

The upper surface 3 may have 180° rotational symmetry around the central axis O1 as viewed from above. The lower surface 5 may have 180° rotational symmetry around the central axis O1 if the lower surface 5 is viewed from the front (from below).

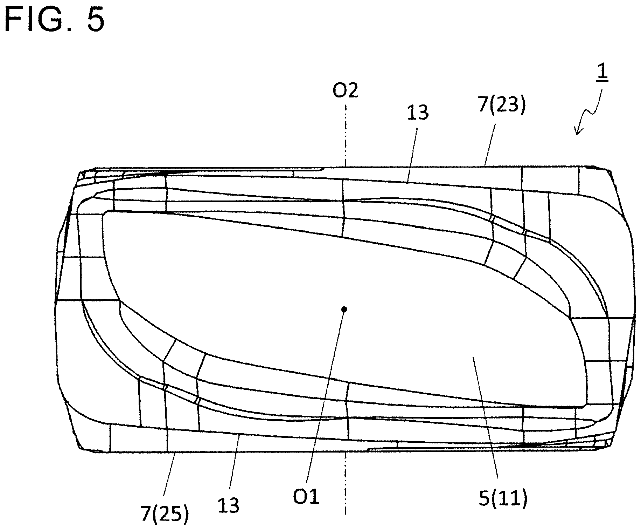

The lower surface 5 may include a planar region 11 located at a midportion of the lower surface 5 as in the non-limiting embodiment illustrated in FIG. 5. The planar region 11 is servable as a seating surface. That is, the planar region 11 is abuttable against (contactable with) a holder when attaching the insert 1 to the holder in the case of manufacturing a machined product by using the upper cutting edge 9.

The planar region 11 may be a flat surface region. The term "flat" as used herein need not be a strict flat. The planar region 11 may be approximately flat, and may be slightly curved or may have slight unevenness to such a degree that cannot be seen if the insert 1 is viewed as a whole. For example, the planar region 11 may include slight unevenness of approximately several tens of pm.

The planar region 11 may be located so as to include the central axis O1. The planar region 11 may be orthogonal to the central axis O1. The term "being orthogonal" is not limited to being strictly orthogonal, but may denote that a range of approximately 90±5° is permissible.

The insert 1 is not limited to having a specific size. For example, a maximum width of the insert 1 if the upper surface 3 is viewed from above may be set to approximately 4-25 mm. A height from the upper surface 3 to the lower surface 5 may be set to approximately 5-20 mm. The term "the height from the upper surface 3 to the lower surface 5" as used herein may denote a maximum value of a distance between the upper surface 3 and the lower surface 5 in a direction parallel to the central axis O1. The height from the upper surface 3 to the lower surface 5 may be rephrased as a width of the lateral surface 7 in a direction along the central axis O1.

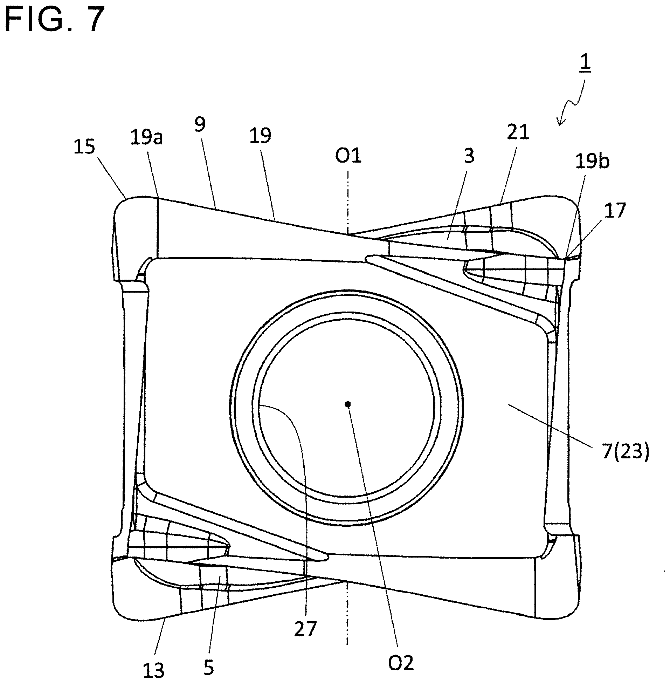

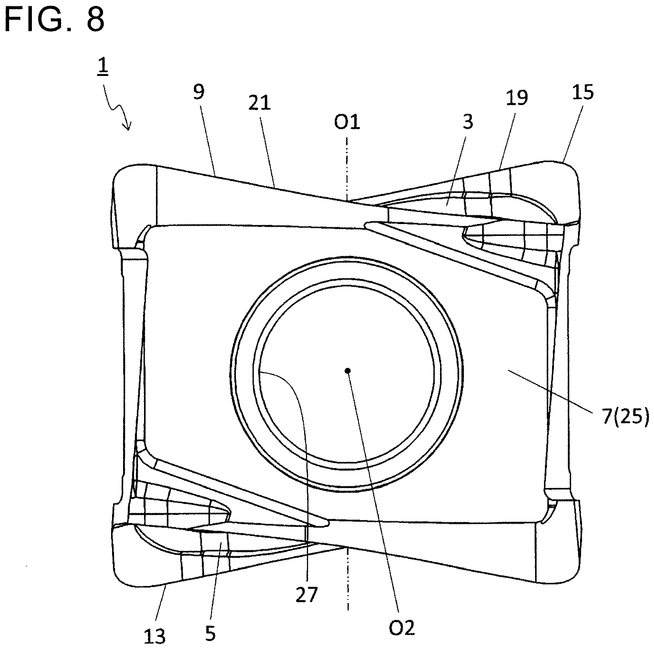

The lateral surface 7 may be located between the upper surface 3 and the lower surface 5. The lateral surface 7 may connect to the upper surface 3 and the lower surface 5 as in the non-limiting embodiment illustrated in FIGs. 7 and 8.

The upper cutting edge 9 may be located on an intersection of the upper surface 3 and the lateral surface 7. The upper cutting edge 9 is usable for machining a workpiece when manufacturing a machined product by using the insert 1.

The upper cutting edge 9 may be located on the whole or a part of the intersection of the upper surface 3 and the lateral surface 7. The upper cutting edge 9 may be located on at least the first side 19 as in the non-limiting embodiment illustrated in FIG. 1, etc. The upper cutting edge 9 may have a straight line shape or a curvilinear shape if the lateral surface 7 is viewed from the front (the side). Alternatively, the upper cutting edge 9 may have a combined shape made up of a straight line and a curved line as viewed from the side.

If the insert 1 includes the upper cutting edge 9, one of the upper surface 3 and the lateral surface 7 may include a rake surface region, and the other of the upper surface 3 and the lateral surface 7 may include a flank surface region. The upper surface 3 may include the rake surface region, and the lateral surface 7 may include the flank surface region as in the non-limiting embodiment illustrated in FIG. 1.

The insert 1 may include a lower cutting edge 13. The lower cutting edge 13 may be located on an intersection of the lower surface 5 and the lateral surface 7. Similarly to the upper cutting edge 9, the lower cutting edge 13 is usable for machining the workpiece when manufacturing the machined produced by using the insert 1.

The lower cutting edge 13 may be located on the whole or a part of the intersection of the lower surface 5 and the lateral surface 7. The lower cutting edge 13 may have a straight line shape or a curvilinear shape as viewed from the side. The lower cutting edge 13 may have a combined shape made up of a straight line and a curved line as viewed from the side. If the insert 1 includes the upper cutting edge 9 and the lower cutting edge 13, the insert 1 is servable as a double-sided insert.

The plurality of corners on the upper surface 3 may include a first corner 15 and a second corner 17. The plurality of sides on the upper surface 3 may include a first side 19. The plurality of sides on the upper surface 3 may further include a second side 21 in addition to the first side 19. That is, the upper surface 3 may include the first corner 15, the second corner 17, the first side 19, and the second side 21.

The first side 19 may connect to the first corner 15 and the second corner 17, and may be inclined so as to be closer to the lower surface 5 as going from an end portion 19a being connected to the first corner 15 to an end portion 19b being connected to the second corner 17 as in the non-limiting embodiment illustrated in FIG. 7. The second side 21 may be located on a side opposite to the first side 19. The second side 21 may be located on a side opposite to the first side 19 on the basis of the central axis O1.

The first side 19 and the second side 21 may be identical or different in length. The first side 19 and the second side 21 may be identical in length as in the non-limiting embodiment illustrated in FIG. 1. Each of the first side 19 and the second side 21 may be one of long sides on the upper surface 3 having the rectangular shape.

The lateral surface 7 may include a first lateral surface 23. The first lateral surface 23 may connect to the first side 19. The lateral surface 7 may further include a second lateral surface 25 in addition to the first lateral surface 23. The second lateral surface 25 may connect to the second side 21.

The insert 1 may include a through hole 27 that opens into the first lateral surface 23 and the second lateral surface 25. The through hole 27 is usable for inserting, for example, a screw when fixing the insert 1 to the holder. Instead of the screw, for example, a clamping member may be used to fix the insert 1 to the holder.

The through hole 27 may open into a center of the first lateral surface 23 and a center of the second lateral surface 25. The center of the first lateral surface 23 and the center of the second lateral surface 25 may be defined similarly to the center of the upper surface 3. An imaginary straight line passing through the center of the first lateral surface 23 and the center of the second lateral surface 25 may be a central axis O2 of the through hole 27. The central axis O2 of the through hole 27 may be orthogonal to the central axis O1 of the insert 1. The through hole 27 is not limited to having such configuration as to open into the first lateral surface 23 and the second lateral surface 25. The through hole 27 may open into, for example, the upper surface 3 and the lower surface 5.

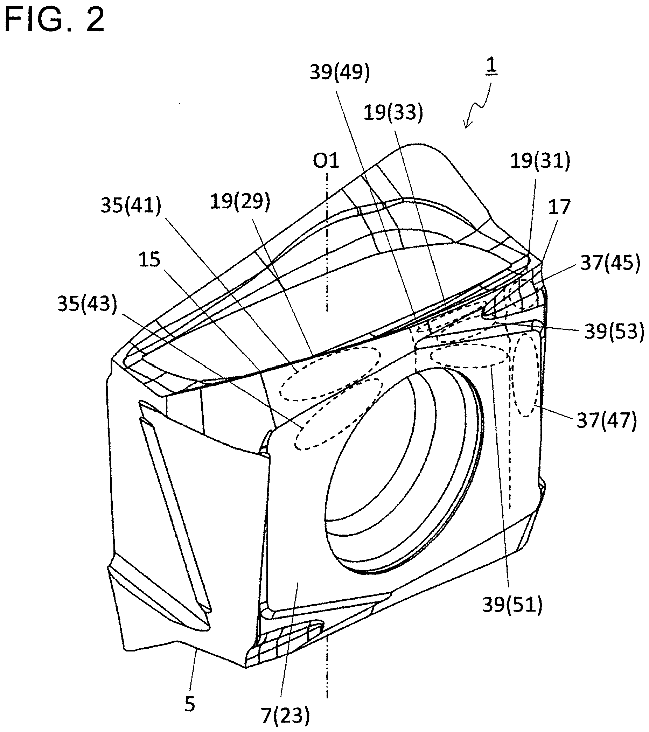

The first side 19 may include a first part 29, a second part 31, and a third part 33 as in the non-limiting embodiment illustrated in FIG. 2. The first part 29 may connect to the first corner 15. The second part 31 may connect to the second corner 17. The third part 33 may be located between the first part 29 and the second part 31. The upper cutting edge 9 may be located at each of the first part 29, the second part 31, and the third part 33.

The first lateral surface 23 may also include a first region 35, a second region 37, and a third region 39. The first region 35 may connect to the first part 29. The second region 37 may connect to the second part 31. The third region 39 may connect to the third part 33.

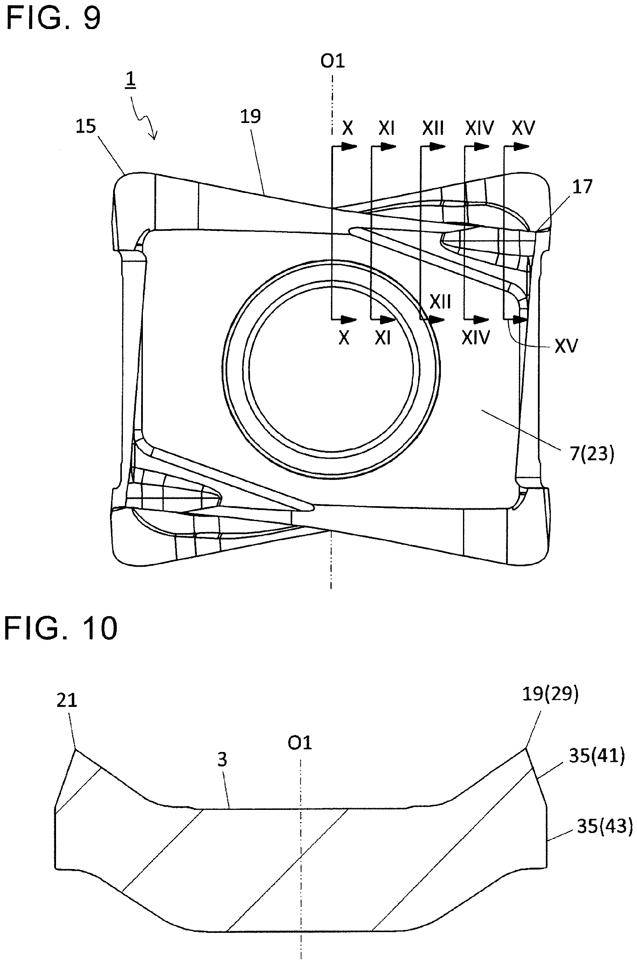

The first region 35 may include a first upper region 41 and a first lower region 43. As in the non-limiting embodiment illustrated in FIG. 10, the first upper region 41 may connect to the first part 29 and may be inclined outward as going away from the first part 29 in a cross section orthogonal to the first side 19 as viewed from above. The term "outward" as used herein may mean a direction away from the central axis O1.

The first lower region 43 may connect to the first upper region 41 and may be parallel to the central axis O1 in the above-mentioned cross section. The term "parallel" as used herein is not limited to strict parallel, but may mean an allowance of an inclination of approximately ±0.5°.

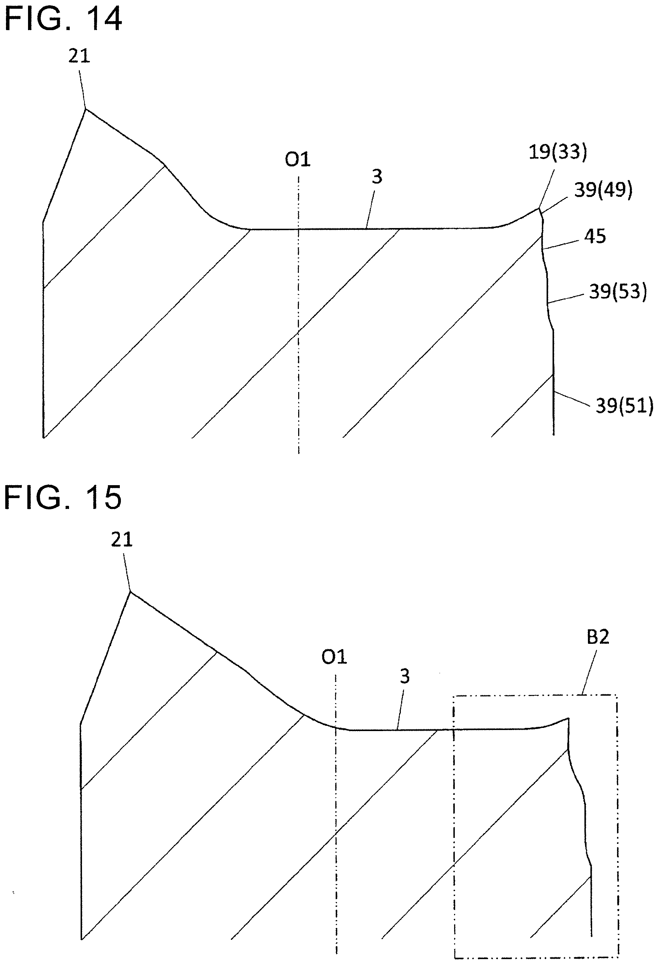

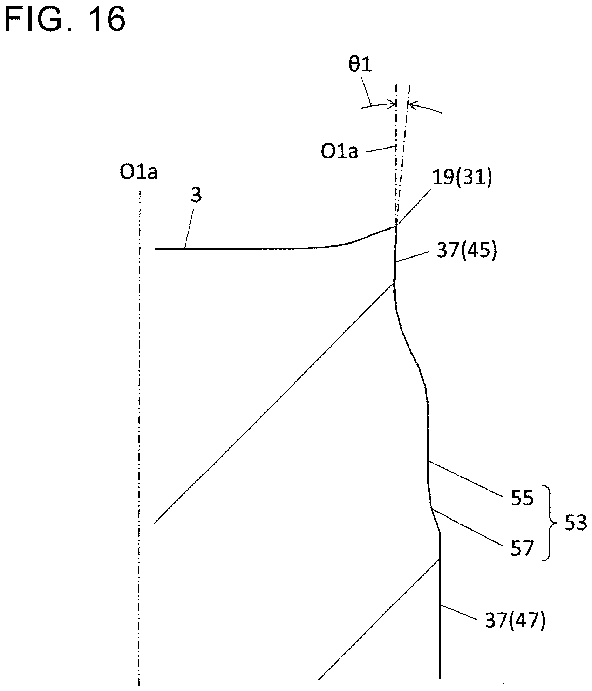

The second region 37 may include a second upper region 45 and a second lower region 47 as in the non-limiting embodiment illustrated in FIG. 2. As in the non-limiting embodiment illustrated in FIGs. 15 and 16, the second upper region 45 may connect to the second part 31 and may be inclined inward as going away from the second part 31 in a cross section orthogonal to the first side 19 as viewed from above. The term "inward" as used herein may mean a direction toward the central axis O1.

The second lower region 47 may be located closer to the lower surface 5 than the second upper region 45, and may be parallel to the central axis O1 in the above-mentioned cross section. A positional relationship with the central axis O1 may be evaluated with reference to an imaginary straight line O1a parallel to the central axis O1 as in the non-limiting embodiment illustrated in FIG. 16.

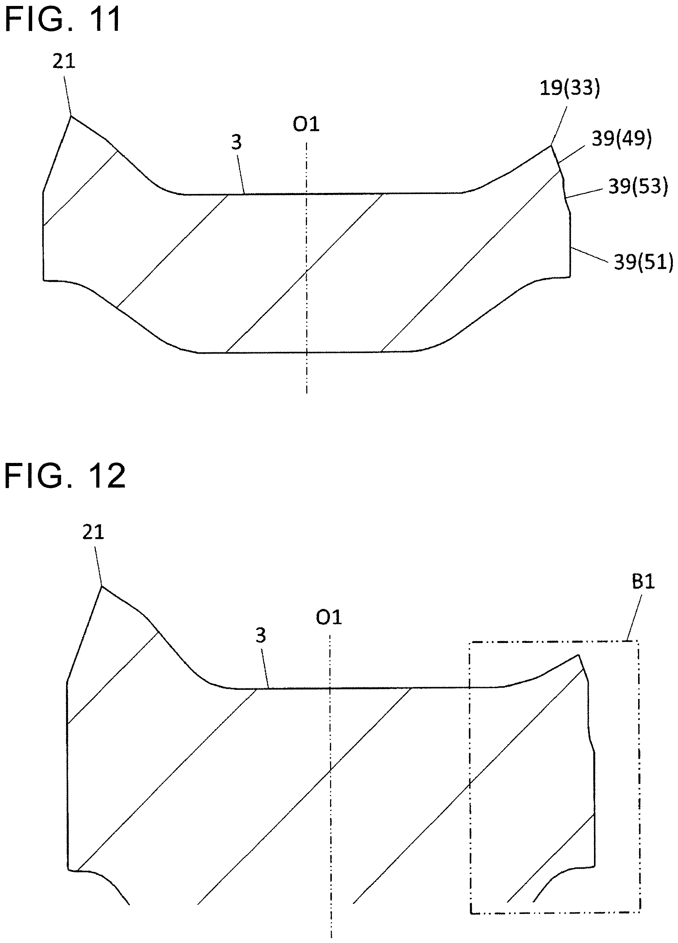

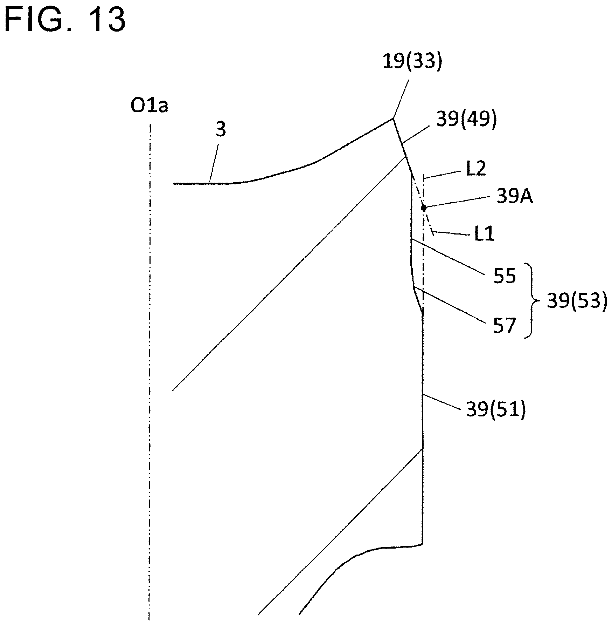

The third region 39 may include a third upper region 49, a third lower region 51, and a concave part 53 as in the non-limiting embodiment illustrated in FIG. 2. As in a non-limiting embodiment illustrated in FIGs. 12 and 13, the third upper region 49 may connect to the third part 33 and may be inclined outward as going away from the third part 33 in a cross section orthogonal to the first side 19 as viewed from above.

The third lower region 51 may be located closer to the lower surface 5 than the third upper region 49, and may be located more outside than the third upper region 49 and may be parallel to the central axis O1 in the above-mentioned cross section.

The concave part 53 may be located between the third upper region 49 and the third lower region 51, and may be recessed inward from an intersection (intersection point 39A) of an imaginary extension line L1 of the third upper region 49 and an imaginary extension line L2 of the third lower region 51.

If the first side 19 is inclined so as to be closer to the lower surface 5 as going from the first corner 15 toward the second corner 17 as in the non-limiting embodiment illustrated in FIG. 2, the first part 29 located near the first corner 15 tends to be subjected to a relatively higher cutting load than the second part 31 located near the second corner 17. If the first region 35 being connected to the first part 29 includes a first upper region 41 inclined outward as going away from the first part 29, and a first lower region 43 parallel to the central axis O1, and both regions connect to each other, the first part 29 has a large thickness and high strength. Consequently, the first part 29 has high durability.

If the second region 37 being connected to the second part 31 that tends to be subjected to a relatively low cutting load includes a second upper region 45 inclined inward as going away from the second part 31, and a second lower region 47 parallel to the central axis O1, the second region 37 is less liable to interfere with a machining surface of a workpiece. Consequently, the machining surface is less liable to be roughened, thus leading to high surface accuracy.

The third part 33 located between the first part 29 and the second part 31 is susceptible to a relatively medium cutting load. If the third region 39 being connected to the third part 33 includes sequentially the third upper region 49 inclined outward as going away from the third part 33, the concave part 53, and the third lower region 51 that is located more outside than the third upper region 49 and is parallel to the central axis O1, the third region 39 is much less liable to interfere with the machining surface of the workpiece than the first region 35, and tends to have higher durability than the second region 37. Thus, the insert 1 has high durability and achieves high surface accuracy of the machined surface.

The above-mentioned cross section in the first upper region 41 and the first lower region 43 may be rephrased as a first cross section that is orthogonal to the first part 29 and includes the first region 35 as viewed from above. The above-mentioned cross section in the second upper region 45 and the second lower region 47 may be rephrased as a second cross section that is orthogonal to the second part 31 and includes the second region 37 as viewed from above. The above-mentioned cross section in the third upper region 49, the third lower region 51, and the concave part 53 may be rephrased as a third cross section that is orthogonal to the third part 33 and includes the third region 39 as viewed from above.

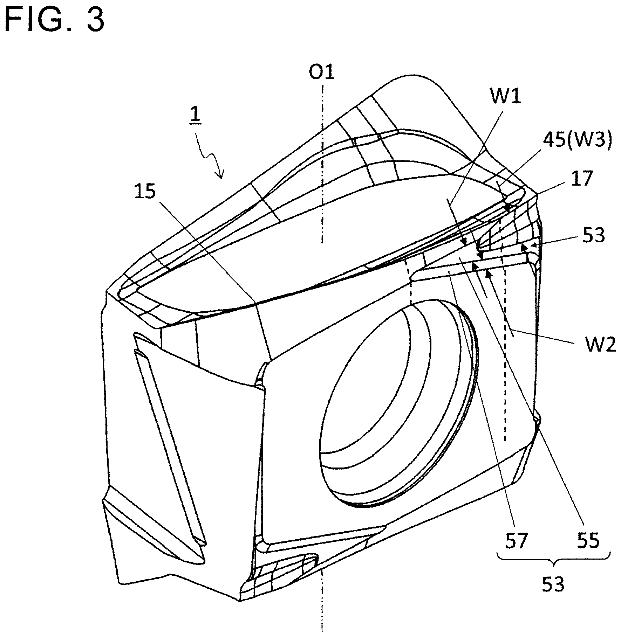

The concave part 53 may include a first partial region 55 and a second partial region 57 as in the non-limiting embodiment illustrated in FIG. 3. The first partial region 55 may connect to the third upper region 49 and may be parallel to the central axis O1 in the above-mentioned cross section (third cross section) as in the non-limiting embodiment illustrated in FIG. 13. The second partial region 57 may connect to the third lower region 51 and the first partial region 55, and may be inclined outward as going away from the first partial region 55 in the above cross section. In these cases, a part located at the third part 33 in the upper cutting edge 9 has enhanced durability, thus leading to high durability of the insert 1.

A width W1 in a direction along the central axis O1 in the first partial region 55 may be constant or changed. For example, the width W1 may increase as coming closer to the second corner 17 as in the non-limiting embodiment illustrated in FIG. 3. With this configuration, the second partial region 57 and the third lower region 51 are less liable to interfere with a machining surface of a workpiece. In cases where the through hole 27 is located below the concave part 53 and the concave part 53 is located closer to the second corner 17 than a center (central axis O2) of the through hole 27 as in the non-limiting embodiment illustrates in FIGs. 1 to 3 and FIG. 7, it is possible to enhance strength of the insert 1 around the through hole 27. Therefore, a crack is less liable to occur around the through hole 27 when fixing the insert 1 to the holder.

A width W2 in a direction along the central axis O1 in the second partial region 57 may be constant or changed. For example, if the width W2 is constant as in the non-limiting embodiment illustrated in FIG. 3, load exerted on the second partial region 57 during machining is less liable to be concentrated at a certain location and tends to be dispersed in a wide range of the second partial region 57.

A width W3 in a direction along the central axis O1 in the second upper region 45 may be constant or changed. For example, the width W3 may increase as coming closer to the second corner 17 as in the non-limiting embodiment illustrated in FIG. 3. With this configuration, the second lower region 47 is less liable to interfere with a machining surface of a workpiece.

The concave part 53 may also be located between the second upper region 45 and the second lower region 47 as in the non-limiting embodiment illustrated in FIGs. 2 and 3. With this configuration, the second lower region 47 is less liable to interfere with a machining surface of a workpiece, and a part located at the second part 31 in the upper cutting edge 9 has enhanced durability.

The first lower region 43, the second lower region 47, and the third lower region 51 may be located on an identical plane as in the non-limiting embodiment illustrated in FIG. 2. The first lower region 43, the second lower region 47, and the third lower region 51 are servable as a so-called constraining surface when attaching the insert 1 to the holder. If the first lower region 43, the second lower region 47, and the third lower region 51 are located on the identical plane, the insert 1 tends to be stably constrained by the holder if these regions are used as the constraining surface.

An end on a side of the second corner 17 in the first part 29 may be located closer to the second corner 17 than the central axis O1 as in the non-limiting embodiment illustrated in FIG. 2. A length of the first part 29 may be larger than each of a length of the second part 31 and a length of the third part 33. The length of the third part 33 may be larger than the length of the second part 31.

The third part 33 may connect to the first part 29 or may be located away from the first part 29. Similarly, the third part 33 may connect to the second part 31 or may be located away from the second part 31. For example, the third part 33 may connect to each of the first part 29 and the second part 31 as in the non-limiting embodiment illustrated in FIG. 2. In this case, the third region 39 may connect to each of the first region 35 and the second region 37.

The second upper region 45 may be inclined at an inclination angle θ1 as in the non-limiting embodiment illustrated in FIG. 16. The inclination angle θ1 may be evaluated by an angle with respect to the central axis O1 (imaginary straight line O1a). The inclination angle θ1 is not limited to a specific value. For example, the inclination angle θ1 may be set to 1-5°.

The second upper region 45 may be located between the third upper region 49 and the concave part 53 as in the non-limiting embodiment illustrated in FIG. 14.

For example, cemented carbide and cermet are usable as a material of the insert 1. Examples of composition of the cemented carbide may include WC-Co, WC-TiC-Co, and WC-TiC-TaC-Co, in which WC, TiC and TaC may be hard particles and Co may be a binding phase.

The cermet may be a sintered composite material obtainable by compositing metal into a ceramic component. Examples of the cermet may include titanium compounds composed mainly of titanium carbide (TiC) or titanium nitride (TiN). Of course, it should be clear that the material of the insert 1 is not limited to the above compositions.

A surface of the insert 1 may be coated with a coating film by using chemical vapor deposition (CVD) method or physical vapor deposition (PVD) method. Examples of composition of the coating film may include titanium carbide (TiC), titanium nitride (TiN), titanium carbon nitride (TiCN), and alumina (Al₂O₃).

### <Cutting Tools>

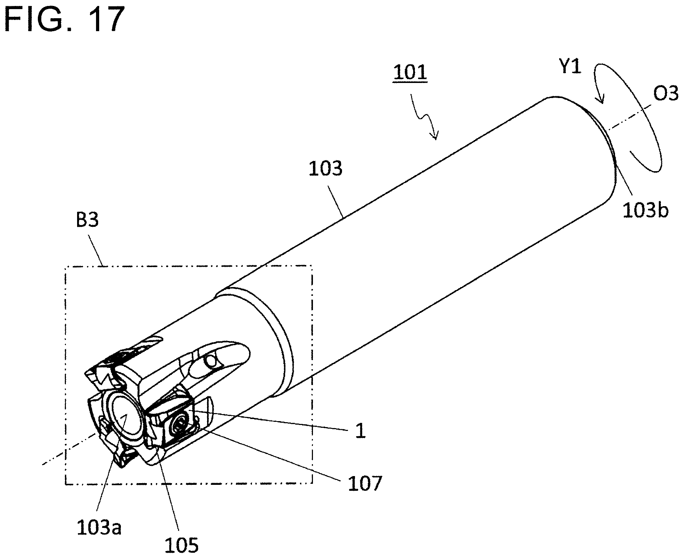

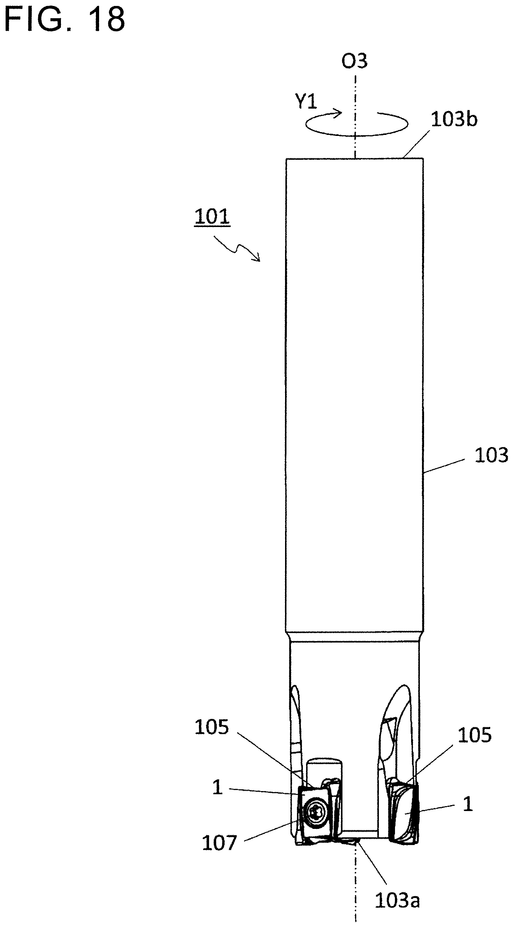

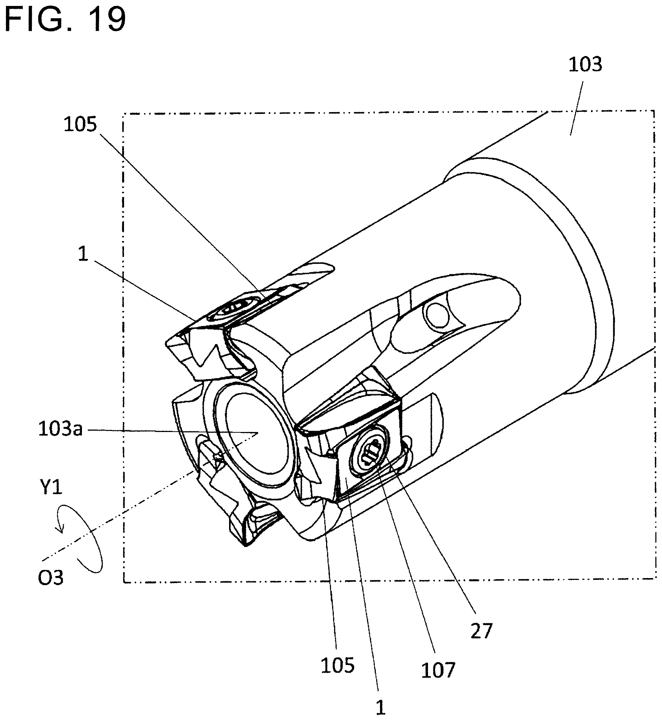

A cutting tool 101 in a non-limiting embodiment of the present disclosure is described below with reference to FIGs. 17 to 19. As in the non-limiting embodiment illustrated in FIG. 17, etc., a rotation axis O3 of the cutting tool 101 may be indicated by a two-dot chain line, and a rotation direction of the rotation axis O3 may be indicated by an arrow Y1.

The cutting tool 101 may include a holder 103 and an insert 1 as in the non-limiting embodiment illustrated in FIGs. 17 to 19. If the cutting tool 101 includes the insert 1, excellent cutting performance is attainable because of high durability of the insert 1 and high surface accuracy of a machined surface.

The cutting tool 101 is rotatable around the rotation axis 03. The cutting tool 101 may be used for a milling process.

The holder 103 may have a columnar shape extending along the rotation axis O3 from a first end 103a to a second end 103b. The columnar shape may be an approximately columnar shape, and need not be a strict columnar shape.

The holder 103 may include a pocket 105 located on a side of the first end 103a. The insert 1 is attachable to the pocket 105. The pocket 105 may open into an outer peripheral surface of the holder 103 and an end surface on a side of the first end 103a.

The insert 1 may be located in the pocket 105. There may be one or a plurality of pockets 105. If the holder 103 includes the plurality of pockets 105, the cutting tool 101 may include a plurality of inserts 1, and the inserts 1 may be located one by one in the pockets 105.

In cases where the holder 103 includes the plurality of pockets 105, these pockets 105 may be located around the rotation axis O3 at equal intervals or unequal intervals.

The insert 1 may be fitted to the pocket 105 so that at least a part of the cutting edge can protrude from the holder 103. For example, the insert 1 may be attached to the holder 103 so that the upper cutting edge 9 can protrude from the holder 103 toward a workpiece. In this case, the lower surface 5 and the lateral surface 7 may be in contact with the holder 103.

The insert 1 may be attached to the holder 103 so that the first corner 15 can be located closer to the first end 103a than the second corner 17, and so that the first side 19 can be located closer to an outer periphery side than the second side 21.

The insert 1 may be fitted into the pocket 105 with a screw 107. Specifically, the insert 1 may be attached to the holder 103 by inserting the screw 107 into the through hole 27 of the insert 1, and by inserting a front end of the screw 107 into a screw hole formed in the pocket 105 so as to fix the screw 107 to the screw hole.

For example, steel and cast iron are usable as a material of the holder 103. If the material of the holder 103 is steel, the holder 103 has high toughness.

### <Methods for Manufacturing Machined Product>

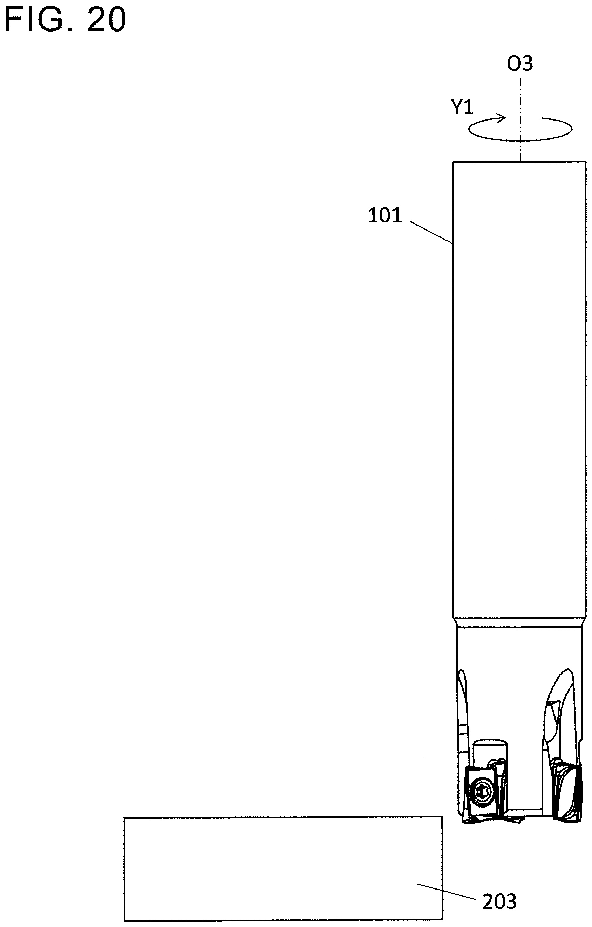

A method for manufacturing a machined product 201 in a non-limiting embodiment of the present disclosure is described below with reference to FIGs. 20 to 22.

The machined product 201 may be manufactured by carrying out a machining process of a workpiece 203. The method for manufacturing the machined product 201 may include the following steps:
(1) rotating the cutting tool 101 represented by the above non-limiting embodiment;
(2) bringing the cutting tool 101 being rotated into contact with the workpiece 203; and
(3) moving the cutting tool 101 away from the workpiece 203.

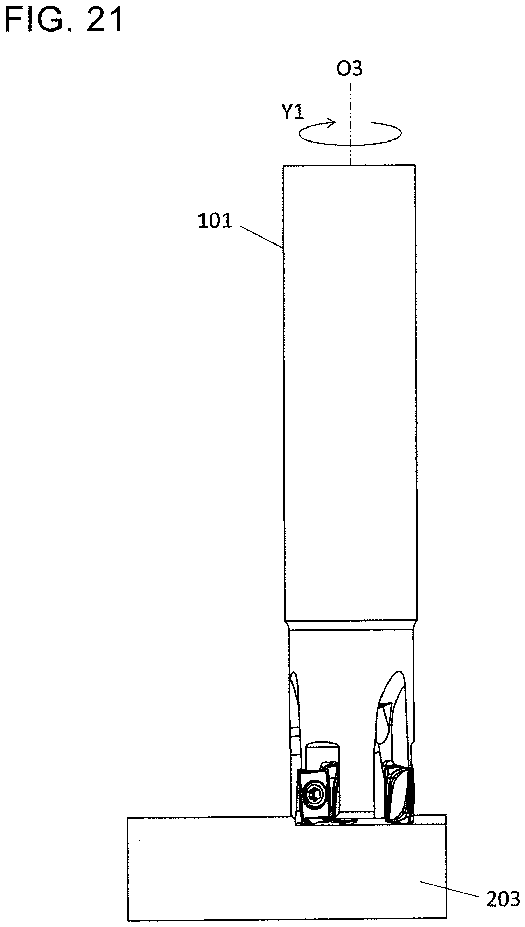

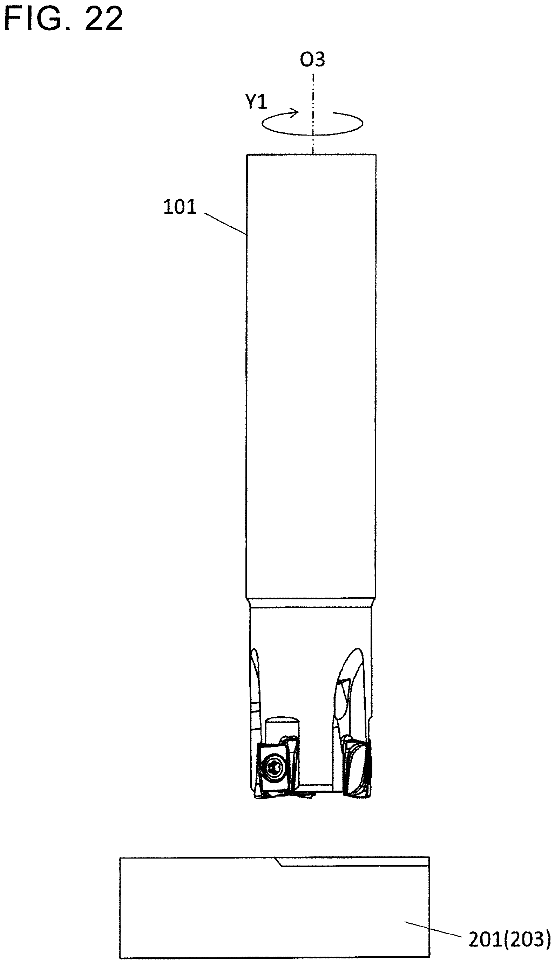

Specifically, firstly, the cutting tool 101 may be relatively brought near the workpiece 203 while rotating the cutting tool 101 around the rotation axis O3 in a Y1 direction as in the non-limiting embodiment illustrated in FIG. 20. Subsequently, the workpiece 203 may be cut out by bringing the upper cutting edge 9 of the cutting tool 101 into contact with the workpiece 203 as in the non-limiting embodiment illustrated in FIG. 21. Thereafter, the cutting tool 101 may be relatively moved away from the workpiece 203 as in the non-limiting embodiment illustrated in FIG. 22.

The machined product 201 having a highly precise machined surface is obtainable by going through the foregoing steps.

Although the workpiece 203 is fixed and the cutting tool 101 is moved in the individual steps in the non-limiting embodiment illustrated in FIGs. 20 to 22, there is, of course, no intention to limit to this embodiment.

For example, the workpiece 203 may be brought near the cutting tool 101 in the step (1). Similarly, the workpiece 203 may be moved away from the cutting tool 101 in the step (3). If it is desired to continue the machining process, the step of bringing the upper cutting edge 9 of the insert 1 into contact with different portions of the workpiece 203 may be repeated while keeping the cutting tool 101 rotated.

Examples of material of the workpiece 203 may include carbon steel, alloy steel, stainless steel, cast iron, and nonferrous metals.

### Description of the Reference Numeral

- 1: cutting insert (insert)
- 3: upper surface
- 5: lower surface
- 7: lateral surface
- 9: upper cutting edge
- 11: planar region
- 13: lower cutting edge
- 15: first corner
- 17: second corner
- 19: first side
- 19a: end part
- 19b: end part
- 21: second side
- 23: first lateral surface
- 25: second lateral surface
- 27: through hole
- 29: first part
- 31: second part
- 33: third part
- 35: first region
- 37: second region
- 39: third region
- 41: first upper region
- 43: first lower region
- 45: second upper region
- 47: second lower region
- 49: third upper region
- 51: third lower region
- 53: concave part
- 55: first partial region
- 57: second partial region
- 101: cutting tool
- 103: holder
- 103a: first end
- 103b: second end
- 105: pocket
- 107: screw
- 201: machined product
- 203: workpiece
- O1: central axis of cutting insert
- O2: central axis of through hole
- O3: rotation axis

## Claims

1. A cutting insert, comprising:
an upper surface having a polygonal shape;
a lower surface located on a side opposite to the upper surface;
a lateral surface located between the upper surface and the lower surface; and
an upper cutting edge located on an intersection of the upper surface and the lateral surface, wherein
an imaginary straight line passing through a center of the upper surface and a center of the lower surface is a central axis,
the upper surface comprises
a first corner,
a second corner, and
a first side that is connected to the first corner and the second corner and is inclined so as be closer to the lower surface as going from an end part being connected to the first corner toward an end part being connected to the second corner,
the lateral surface comprises a first lateral surface being connected to the first side,
the first side comprises
a first part being connected to the first corner,
a second part being connected to the second corner, and
a third part located between the first part and the second part,
the first lateral surface comprises
a first region being connected to the first part,
a second region being connected to the second part, and
a third region being connected to the third part,
the first region comprises, in a cross section orthogonal to the first side as viewed from above,
a first upper region that is connected to the first part and is inclined outward as going away from the first part, and
a first lower region that is connected to the first upper region and is parallel to the central axis,
the second region comprises, in a cross section orthogonal to the first side as viewed from above,
a second upper region that is connected to the second part and is inclined inward as going away from the second part, and
a second lower region that is located closer to the lower surface than the second upper region and is parallel to the central axis, and
the third region comprises, in a cross section orthogonal to the first side as viewed from above,
a third upper region that is connected to the third part and is inclined outward as going away from the third part,
a third lower region that is located closer to the lower surface than the third upper region and is located more outside than the third upper region and is parallel to the central axis, and
a concave part that is located between the third upper region and the third lower region and is recessed inward from an intersection of an imaginary extension line of the third upper region and an imaginary extension line of the third lower region.

2. The cutting insert according to claim 1, wherein
the concave part comprises
a first partial region that is connected to the third upper region and is parallel to the central axis, and
a second partial region that is connected to the third lower region and the first partial region and is inclined outward as going away from the first partial region.

3. The cutting insert according to claim 2, wherein a width in a direction along the central axis in the first partial region increases as coming closer to the second corner.

4. The cutting insert according to claim 2 or 3, wherein a width in a direction along the central axis in the second partial region is constant.

5. The cutting insert according to any one of claims 1 to 4, wherein a width in a direction along the central axis in the second upper region increases as coming closer to the second corner.

6. The cutting insert according to any one of claims 1 to 5, wherein the concave part is also located between the second upper region and the second region.

7. The cutting insert according to any one of claims 1 to 6, wherein the first lower region, the second lower region, and the third lower region are located on an identical plane.

8. A cutting tool, comprising:
a holder having a columnar shape extending along a rotation axis from a first end to a second end, the holder comprising a pocket located on a side of the first end; and
the cutting insert according to any one of claims 1 to 7, the cutting insert being located in the pocket.

9. A method for manufacturing a machined product, comprising:
rotating the cutting tool according to claim 8;
bringing the cutting tool being rotated into contact with a workpiece; and
moving the cutting tool away from the workpiece.
